# EUROPÄISCHE PATENTSCHRIFT

(11) **EP 2 250 943 B1**
(45) Veröffentlichungstag und Bekanntmachung des Hinweises auf die Patenterteilung: **21.12.2016**
(21) Anmeldenummer: 10004763.8
(22) Anmeldetag: 05.05.2010
(51) Int. Cl.: A47C 23/043, A47C 23/06, F16F 1/02, A47C 23/00, A47C 27/06, A47C 27/20

(54) **Federelement sowie Matratze und Untermatratze mit solchen Federelementen**
Spring element, mattress and sub-mattress with such spring elements
Elément de ressort et matelas ainsi que sous-matelas doté de tels éléments de ressort

(30) Priorität: 11.05.2009 DE 202009006802 U; 24.06.2009 DE 202009008712 U
(43) Veröffentlichungstag der Anmeldung: 17.11.2010
(73) Patentinhaber: Diemer & Dr. Jaspert GbR, 85630 Grasbrunn (DE)
(72) Erfinder: Jaspert, Bodo, F., 85630 Grasbrunn (DE); Diemer, Gregor, 85456 Wartenberg (DE)
(74) Vertreter: Manitz, Finsterwald & Partner GbR

(56) Entgegenhaltungen:
- DE-A1-102007 020 608
- DE-U1-202006 011 272
- DE-U1-202008 013 104
- US-A1- 2008 189 867

## Beschreibung

Die vorliegende Erfindung betrifft ein Federelement für eine Federkernmatratze oder eine Untermatratze mit einer Basis, einer Deckplatte und einem zwischen Basis und Deckplatte angeordneten Federkörper nach dem Oberbegriff von Anspruch 1, sowie eine Matratze oder Untermatratze nach dem Oberbegriff von Anspruch 9.

Derartige Federelemente werden beispielsweise als Teil einer Untermatratze mit einer Vielzahl von über mindestens einen Teil der Untermatratze verteilt angeordneten, voneinander unabhängigen derartigen Federelementen zur Abstützung einer Obermatratze oder als Federkern einer Obermatratze eingesetzt. In Untermatratzen ersetzen sie in den entsprechenden Bereichen die herkömmlichen Federleisten und bringen den Vorteil einer quasi punktelastischen Abstützung mit sich.

Wichtig ist in allen Fällen eine gute Auflösung der Liegefläche, um den Körper ergonomisch richtig abzustützen, also insbesondere die Doppel-S-Form der Wirbelsäule in Rückenlage nachzubilden und in Seitenlage ein tiefes Eintauchen des Schulter- und/oder Beckenbereichs zu ermöglichen. Eine zu starke Auflösung kann dabei auch nachteilig sein. Zudem entstehen hohe Herstellungskosten, wenn zu viele Einzelelemente eingesetzt werden.

Ein Federelement gemäß dem Oberbegriff von Anspruch 1 und eine Matratze oder Untermatratze gemäß dem Oberbegriff von Anspruch 9 sind aus der DE 10 2007 020 608 A1 bekannt. Weitere Federelemente sind durch DE 20 2008 013 104 U1, DE 20 2006 011 272 U1 und US 2008/189 867 A1 offenbart.

Der Erfindung liegt die Aufgabe zugrunde, Federelemente, Matratzen und Untermatratzen anzugeben, die eine optimale Auflösung der Liegefläche ermöglichen und die geringere Herstellungskosten bewirken. Die Federelemente sollen außerdem ein senkrechtes Einfedern ohne seitliche Verschiebung der Deckplattenteile gewährleisten.

Diese Aufgabe wird für Federelemente durch die Merkmale von Anspruch 1 gelöst.

Durch das Vorsehen einer Deckplatte mit zwei länglichen, nebeneinander angeordneten Teilen, die jeweils über einen eigenen Federkörper gegenüber der Basis abgestützt sind, ergibt sich eine sehr gute Auflösung der Liegefläche bei gleichzeitig niedrigen Herstellungskosten. Die Auflösung durch eine Deckplatte mit zwei Teilen ist doppelt so groß wie die Auflösung bei einer nur einteiligen Deckplatte. Entsprechendes gilt bei drei oder mehr Teilen. Trotzdem sind die Herstellungskosten verhältnismäßig gering, da die Deckplatten gegenüber einer gemeinsamen Basis abgestützt sind, also Teil eines einzigen Federelements sind. Die Herstellungskosten sind dadurch erheblich geringer als bei zwei Federkörpern mit entsprechend kleineren Deckplatten.

Die längliche Form der Teile der Deckplatte hat außerdem den Vorteil, dass die Auflösung des Federelements in zwei zueinander senkrechten Richtungen unterschiedlich ist. Parallel zur Trennlinie zwischen den Teilen der Deckplatte ist die Auflösung geringer als quer hierzu. Dadurch ist es möglich, die Auflösung nach Bedarf zu wählen, indem das Federelement auf der Untermatratze oder in der Matratze in entsprechender Orientierung angeordnet wird.

Die Einzelfederkörper des Federelements sind jeweils mit zwei Federarmen ausgebildet, die zwischen Basis und zugehörigem Deckplattenteil mindestens einmal abgewinkelt sind, bevorzugt ohne dass sich die abgewinkelten Teile in Federrichtung betrachtet überlappen. Die Abwinklung ermöglicht ein weitgehend senkrechtes Einfedern ohne seitliche Verschiebung der Deckplattenteile. Durch die fehlende Überlappung der abgewinkelten Teile ist eine kostengünstige Herstellung ermöglicht, da die Federelemente in Federrichtung leicht entformbar sind.

Die Gesamtaußenkontur der Deckplatte kann quadratisch oder rechteckig sein. Bei einer rechteckigen Gesamtaußenkontur verläuft die Trennlinie zwischen den Deckplattenteilen bevorzugt parallel zur Längsachse des Rechtecks. Dies hat den Vorteil, dass der Schwerpunkt der Deckplattenteile jeweils relativ nahe am Zentrum des Federelements liegt. Ein Verkippen der Deckplattenteile bei Belastung ist dadurch weitgehend verhindert.

Die Einzelfederkörper für die Deckplattenteile sind bevorzugt unabhängig voneinander einfederbar, insbesondere indem diese und/oder die Deckplatten nicht miteinander verbunden sind. Dadurch kann die Feinauflösung des Federelements quer zur Trennlinie zwischen den Deckplattenteilen optimal gewährleistet werden.

Nach einer weiteren Ausgestaltung der Erfindung sind die Federkörper auf einer gemeinsamen Basis abgestützt. Dies erleichtert den Einbau des Federelements in eine Matratze oder Untermatratze. Auch kann das Federelement dadurch besonders gut einstückig hergestellt werden.

Besonders bevorzugt ist eine Ausgestaltung, wonach die Federarme der Einzelfederkörper jeweils von der Basis weg in Richtung auf die längsseitigen Enden des jeweiligen Deckplattenteils und danach zurück in Richtung auf das Zentrum des jeweiligen Deckplattenteils verlaufen. Dadurch ergibt sich eine besonders gute und gleichmäßige Abstützung der Deckplattenteile.

Nach einer weiteren Ausgestaltung der Erfindung weist die Basis auf ihrer Unterseite Elemente einer Art Bajonettverbindung auf, über welche das Federelement mit einer Unterlage mit entsprechenden Gegenelementen verbindbar ist. Durch eine derartige Bajonettverbindung kann das Federelement schnell und einfach auf einer Unterlage angeordnet werden. Die Herstellung einer entsprechenden Matratze oder Untermatratze ist dadurch besonders kostengünstig.

Eine erfindungsgemäße Matratze oder Untermatratze weist die Merkmale von Anspruch 9 auf.

Die genannten Federelemente sind insbesondere im Lordosen- sowie Schulter- und/oder Beckenbereich angeordnet. Im Lordosenbereich verläuft dabei die Trennlinie zwischen den Deckplattenteilen bevorzugt quer zur Längsrichtung der Untermatratze, im Schulter- und Beckenbereich dagegen bevorzugt parallel dazu. Durch diese Anordnung der Federelemente ergibt sich im Schulter- und Beckenbereich eine besonders feine Auflösung in Querrichtung, während im Lordosenbereich eine Feinauflösung in Längsrichtung der Matratze oder Untermatratze erreicht wird. Dadurch wird einerseits ein gutes Eintauchen in Seitenlage ermöglicht und andererseits die Doppel-S-Form der Wirbelsäule in Rückenlage sehr gut nachgebildet.

Nach einer weiteren Ausgestaltung der Erfindung weist die Matratze oder Untermatratze Federelemente mit Bajonettverbindungselementen auf, wobei zwei Arten von Federelementen vorgesehen sind, deren Bajonettverbindungselemente um 90° gegeneinander verdreht sind. Dadurch können die Federelemente in einfacher Weise in zwei unterschiedlichen Orientierungen in der Matratze oder auf der Untermatratze angeordnet werden, um eine Feinauflösung wahlweise in Längs- oder Querrichtung der Matratze oder Untermatratze zu erreichen.

Ausführungsbeispiele der Erfindung sind in den Zeichnungen dargestellt und werden nachfolgend beschrieben. Es zeigen jeweils in schematischer Darstellung,
- Fig. 1: eine perspektivische Ansicht eines erfindungsgemäßen Federelements,
- Fig. 2: eine Draufsicht auf die Oberseite des Federelements von Fig. 1,
- Fig. 3: eine Seitenansicht des Federelements von Fig. 1,
- Fig. 4: eine um 90° gedrehte Seitenansicht des Federelements von Fig. 1,
- Fig. 5: eine perspektivische Ansicht einer Untermatratze mit erfindungsgemäßen Federelementen,
- Fig. 6: eine Draufsicht auf die Untermatratze von Fig. 5,
- Fig. 7: eine Draufsicht auf eine andere erfindungsgemäße Untermatratze, und
- Fig. 8: eine perspektivische Ansicht eines Teils einer erfindungsgemäßen Matratze.

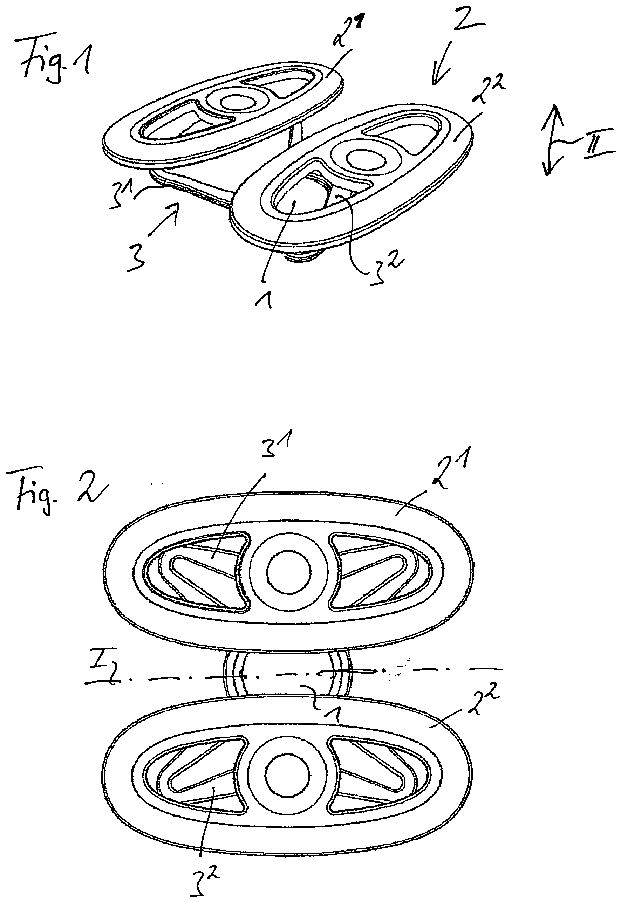

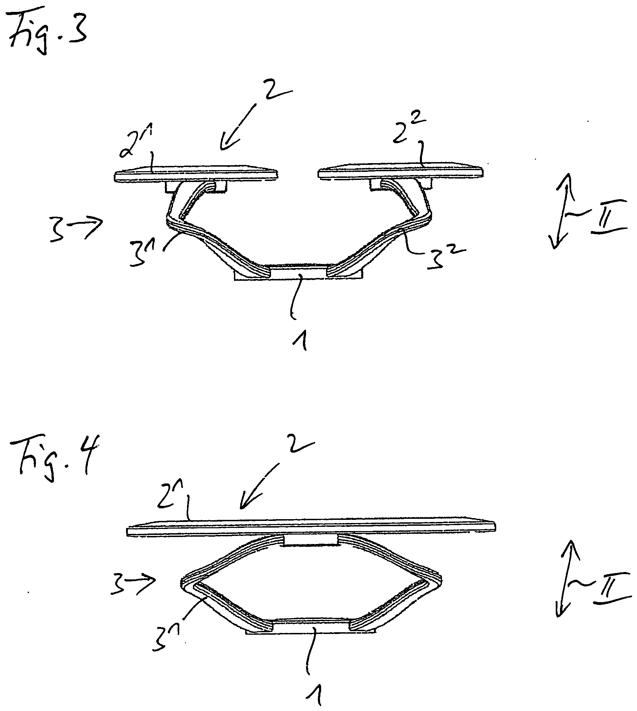

Das in den Fig. 1 bis 4 dargestellte Federelement umfasst eine Basis 1, eine Deckplatte 2 und einen zwischen Basis 1 und Deckplatte 2 angeordneten Federkörper 3. Die Deckplatte 2 besteht dabei aus zwei länglichen, nebeneinander angeordneten Teilen 2¹ und 2², wobei jeder Deckplattenteil 2¹, 2² über einen eigenen Einzelfederkörper 3¹, 3² gegenüber der Basis 1 abgestützt ist.

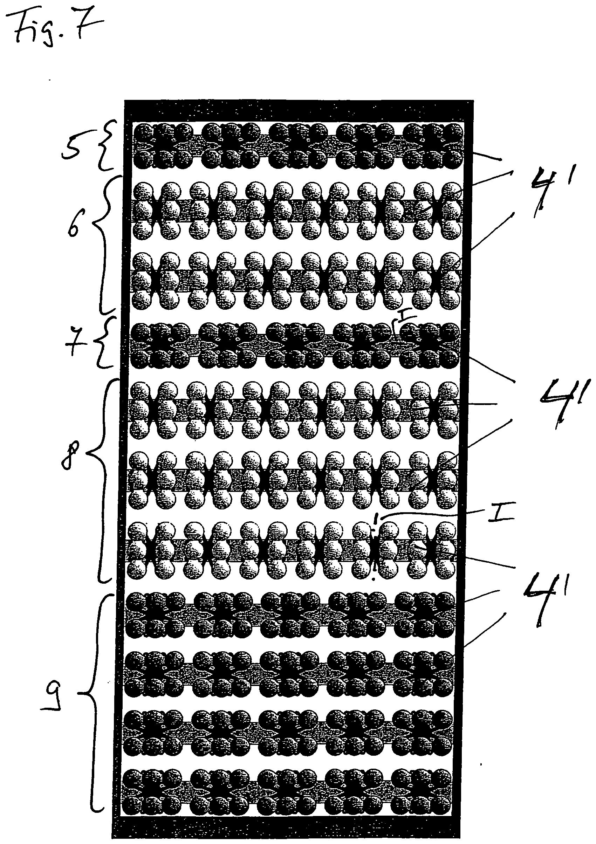

Wie man insbesondere in Fig. 2 sieht, weisen die Deckplattenteile 2¹, 2² eine längliche Form auf und sind parallel zu einer Trennlinie I nebeneinander angeordnet. Außerdem erkennt man in Fig. 2, dass die Gesamtaußenkontur der Deckplatte 2 im Wesentlichen quadratisch ist. Abweichend hiervon kann die Gesamtaußenkontur auch rechteckig sein, wie dies bei den in Fig. 7 dargestellten Federelementen 4' der Fall ist. Die Trennlinie I zwischen den beiden Deckplattenteilen 2¹, 2² liegt dabei parallel zur Längsachse des Rechtecks. Dadurch ist der Abstand zwischen dem Schwerpunkt jedes Deckplattenteils 2¹, 2² und dem Zentrum des Federelements 4' verhältnismäßig gering.

Die beiden Einzelfederkörper 3¹ und 3² sind jeweils durch Federarme gebildet, die sich ausgehend von der Basis 1 weg in Richtung auf die längsseitigen Enden des jeweiligen Deckplattenteils 2¹, 2² und danach zurück in Richtung auf die Mitte des jeweiligen Deckplattenteils 2¹, 2² erstrecken, wie man insbesondere in Fig. 1 und 2 erkennt. In diesen Figuren erkennt man auch, dass sich die abgewinkelten Teile der Federarme in Federrichtung II betrachtet nicht gegenseitig überlappen. Dadurch ist eine leichte Entformbarkeit des Federelements gewährleistet.

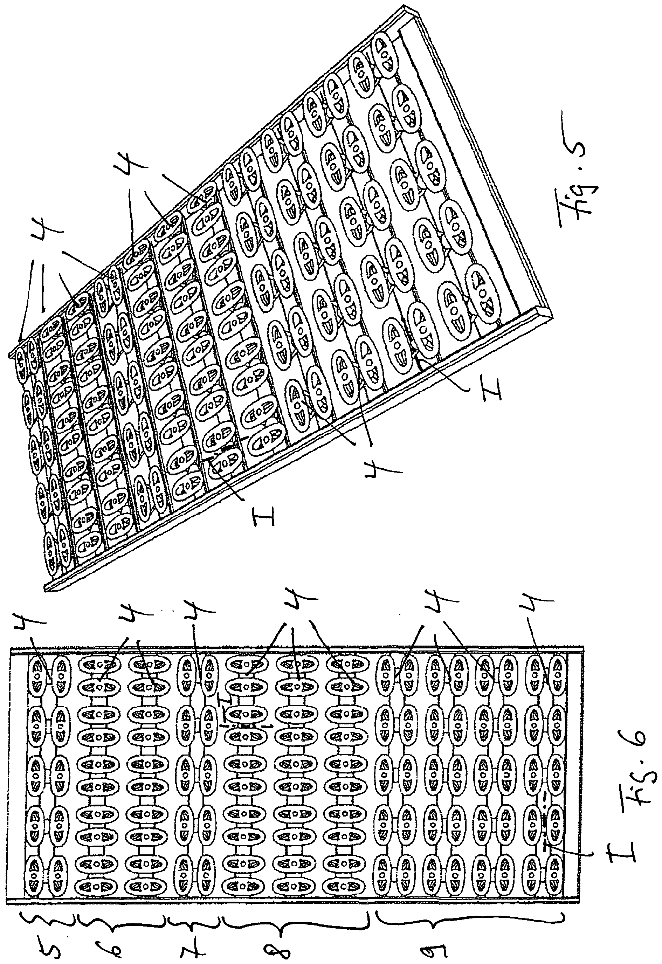

Die in den Fig. 5 und 6 dargestellte Untermatratze weist eine Vielzahl von Federelementen 4 gemäß den Fig. 1 bis 4 auf. Die Untermatratze ist in einen Kopfbereich 5, einen daran anschließenden Schulterbereich 6, einen darauf folgenden Lordosenbereich 7, dann einen Beckenbereich 8 und schließlich einen Bein- und Fußbereich 9 unterteilt. In allen Bereichen sind erfindungsgemäße Federelemente 4 angeordnet. Die erfindungsgemäßen Federelemente 4 sind jedoch in den unterschiedlichen Bereichen 5 bis 9 unterschiedlich orientiert, nämlich im Kopfbereich 5, im Lordosenbereich 7 und im Bein- und Fußbereich 9 derart, dass sich die Trennlinie I zwischen den beiden Kopfplattenteilen 2¹ und 2² quer zur Längsrichtung der Untermatratze erstreckt. In den übrigen Bereichen, also dem Schulterbereich 6 und dem Beckenbereich 8 erstreckt sich die Trennlinie I dagegen parallel zur Längsrichtung der Untermatratze.

Wie man in den Fig. 5 und 6 sehen kann, ergibt sich dadurch eine besonders feine Auflösung im Schulterbereich 6 und im Beckenbereich 8 in Querrichtung der Untermatratze und in den übrigen Bereichen 5,7, 9 in Längsrichtung der Untermatratze. Dadurch wird einerseits ein besonders tiefes Eintauchen im Schulter- und Beckenbereich 6, 8 für die Seitenlage und andererseits eine optimale Unterstützung der Doppel-S-Form für die Rückenlage erreicht. Im Vergleich zu herkömmlichen Untermatratzen mit Einzelstützelementen sind die Herstellungskosten deutlich verringert, da die Feinauflösung durch weniger Elemente erreicht werden kann. Jedes Federelement 4 hat zwei Deckplattenteile 2¹, 2², die insbesondere unabhängig voneinander einfedern können. Ein einziges Federelement 4 bewirkt dadurch eine doppelt so hohe Auflösung wie bei bekannten Elementen. Zudem ermöglicht die längliche Ausgestaltung der Deckplattenteile 2¹, 2², dass die besonders feine Auflösung nur in einer Richtung in der Ebene der Untermatratze gegeben ist. Dadurch wird eine zu feine Auflösung der gesamten Untermatratzenfläche vermieden.

Bei der in Fig. 7 dargestellten Untermatratze sind die Federelemente 4' in entsprechender Weise angeordnet. Lediglich die Federelemente 4' unterscheiden sich gegenüber den Federelementen 4 der Untermatratze von Fig. 5 und 6. Die Federelemente 4' weisen, wie bereits oben erwähnt, eine rechteckige Gesamtaußenkontur auf. Dadurch sind im Kopf Lordosensowie Bein- und Fußbereich 5, 6, 9 in Querrichtung weniger Federelemente angeordnet als im Schulter- und Beckenbereich 6, 8. Anders als in den Fig. 5 bis 7 dargestellt, können erfindungsgemäße Federelemente 4, 4' auch nur in Teilen der Untermatratze vorgesehen sein.

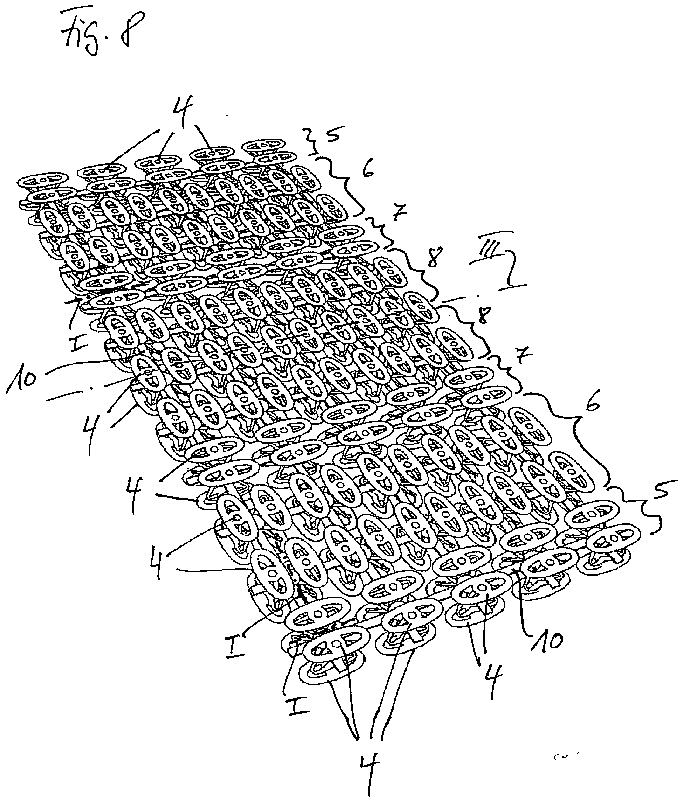

Fig. 8 zeigt den Federkern einer erfindungsgemäßen Matratze mit einem gitterartig aufgebauten Träger 10, auf dessen beiden Seiten jeweils Federelemente 4 angeordnet sind. Die Federelemente 4 sind dabei über ihre Basis 1 mit dem Träger 10 verbunden, wobei die Verbindung wieder in Art einer Bajonettverbindung ausgebildet sein kann.

Wie man in Fig. 8 sieht, sind die Federelemente 4 der Matratze so angeordnet, dass der Federkern symmetrisch zu der Quermittelebene III der Matratze ist. In jeder Hälfte der Matratze ist dadurch ein Kopfbereich 5, ein Schulterbereich 6, ein Lordosenbereich 7 und ein Beckenbereich 8 ausgebildet. Im Schulter- und Beckenbereich 6, 8 verläuft die Trennlinie I der Federelemente 4 parallel zur Längsrichtung der Matratze und in den übrigen Bereichen, also im Kopfbereich 5 und im Lordosenbereich 7 quer zur Längsrichtung der Matratze. Die Matratze kann dadurch in beiden Orientierungen gleichermaßen verwendet werden. Die beschriebene Orientierung der Federelemente 4 bewirkt dieselben Vorteile wie bei den zuvor beschriebenen Untermatratzen.

### Bezugszeichenliste

- 1: Basis
- 2: Deckplatte
- 2¹, 2²: Deckplattenteil
- 3: Federkörper
- 3¹, 3²: Einzelfederkörper
- 4: Federelement
- 4': Federelement
- 5: Kopfbereich
- 6: Schulterbereich
- 7: Lordosenbereich
- 8: Beckenbereich
- 9: Bein- und Fußbereich
- 10: Träger
- I: Trennlinie
- II: Federrichtung
- III: Quermittelebene

## Patentansprüche

1. Federelement für eine Federkernmatratze oder eine Untermatratze mit einer Basis (1), einer Deckplatte (2) und einem zwischen Basis (1) und Deckplatte (2) angeordneten Federkörper (3), wobei
die Deckplatte (2) aus zwei länglichen, parallel zu einer Trennlinie (I) nebeneinander angeordneten Teilen (2¹, 2²) besteht und jeder Teil (2¹, 2²) über einen eigenen Einzelfederkörper (3¹, 3²) gegenüber der Basis (1) abgestützt ist, wobei jeder Einzelfederkörper (3¹, 3²) mit zwei Federarmen ausgebildet ist, die zwischen Basis (1) und zugehörigem Deckplattenteil (2¹, 2²) mindestens einmal abgewinkelt sind.

2. Federelement nach Anspruch 1,
**dadurch gekennzeichnet, dass**
die Gesamtaußenkontur der Deckplattenteile (2¹, 2²) zumindest annähernd quadratisch ist.

3. Federelement nach Anspruch 1,
**dadurch gekennzeichnet, dass**
die Gesamtaußenkontur der Deckplattenteile (2¹, 2²) zumindest annähernd rechteckig ist, wobei die Trennlinie (I) zwischen den Deckplattenteilen (2¹, 2²) insbesondere parallel zur Längsachse des Rechtecks verläuft.

4. Federelement nach einem der vorhergehenden Ansprüche,
**dadurch gekennzeichnet, dass**
die Einzelfederkörper (3¹, 3²) unabhängig voneinander einfederbar sind, insbesondere indem keine Verbindung zwischen den Einzelfederkörpern (3¹, 3²) untereinander und/oder den Deckplattenteilen (2¹, 2²) untereinander vorhanden sind.

5. Federelement nach einem der vorhergehenden Ansprüche,
**dadurch gekennzeichnet, dass**
die Einzelfederkörper (3¹, 3²) gegenüber einer gemeinsamen Basis (1) abgestützt sind.

6. Federelement nach einem der vorhergehenden Ansprüche,
**dadurch gekennzeichnet, dass**
sich die abgewinkelten Teile der Einzelfederkörper (3¹, 3²) in Federrichtung (II) betrachtet nicht überlappen.

7. Federelement nach einem der vorhergehenden Ansprüche,
**dadurch gekennzeichnet, dass**
die Federarme von der Basis (1) weg in Richtung auf die längsseitigen Enden des jeweiligen Deckplattenteils (2¹, 2²) und danach zurück in Richtung auf die Mitte des jeweiligen Deckplattenteils (2¹, 2²) verlaufen.

8. Federelement nach einem der vorhergehenden Ansprüche,
**dadurch gekennzeichnet, dass**
die Basis (1) auf ihrer Unterseite Elemente einer Art Bajonettverbindung aufweist, über welche das Federelement mit einer Unterlage mit entsprechenden Gegenelementen verbindbar ist.

9. Matratze oder Untermatratze mit einer Vielzahl von über die Liegefläche verteilt angeordneten Einzelstützelementen,
**dadurch gekennzeichnet, dass**
zumindest bereichsweise Einzelstützelemente vorgesehen sind, die durch Federelemente (4, 4') nach einem der vorhergehenden Ansprüche gebildet sind, wobei
im Lordosenbereich (7) derartige Federelemente (4, 4') angeordnet sind, deren Trennlinie (I) quer zur Längsrichtung der Matratze oder Untermatratze verläuft und
wobei
im Schulterbereich (6) und/oder im Beckenbereich (8) derartige Federelemente (4, 4') angeordnet sind, deren Trennlinie (I) parallel zur Längsrichtung der Matratze oder Untermatratze verläuft.

10. Matratze oder Untermatratze nach Anspruch 9,
**dadurch gekennzeichnet, dass**
derartige Federelemente (4, 4') mit Bajonettverbindungselementen vorgesehen sind, wobei zwei Arten von Federelementen (4, 4') vorgesehen sind, deren Bajonettverbindungselemente um 90° gegeneinander verdreht angeordnet sind.

11. Matratze nach Anspruch 9 oder 10,
**dadurch gekennzeichnet, dass**
die Federelemente (4, 4') beidseits eines Trägers (10) angeordnet sind, wobei die Basis (1) jeweils mit dem Träger (10) verbunden ist.

12. Matratze nach einem der Ansprüche 9 bis 11,
**dadurch gekennzeichnet, dass**
die Federelemente (4, 4') symmetrisch zu einer Quermittelebene (III) der Matratze angeordnet sind.

## Claims

1. A spring element for an innerspring mattress or for an undermattress comprising a base (1), a cover plate (2) and a spring body (3) arranged between the base (1) and the cover plate (2), wherein the cover plate (2) comprises two elongate parts (2¹, 2²) which are arranged next to one another in parallel with a separation line (I) and each part (2¹, 2²) is supported via a separate individual spring body (3¹, 3²) with respect to the base (1); and wherein each individual spring body (3¹, 3²) is configured with two spring arms which are angled at least once between the base (1) and the associated cover plate part (2¹, 2²).

2. A spring element in accordance with claim 1,
**characterized in that**
the total outer contour of the cover plate parts (2¹, 2²) is at least approximately square.

3. A spring element in accordance with claim 1,
**characterized in that**
the total outer contour of the cover plate parts (2¹, 2²) is at least approximately rectangular, with the separation line (I) between the cover plate parts (2¹, 2²) in particular extending in parallel with the longitudinal axis of the rectangle.

4. A spring element in accordance with any one of the preceding claims,
**characterized in that**
the individual spring bodies (3¹, 3²) can be deflected independently of one another, in particular **in that** there is no connection between the individual spring bodies (3¹, 3²) among one another and/or between the cover plate parts (2¹, 2²) among one another.

5. A spring element in accordance with any one of the preceding claims,
**characterized in that**
the individual spring bodies (3¹, 3²) are supported with respect to a common base (1).

6. A spring element in accordance with any one of the preceding claims,
**characterized in that**
the angled parts of the individual spring bodies (3¹, 3²) do not overlap viewed in the spring direction (II).

7. A spring element in accordance with any one of the preceding claims,
**characterized in that**
the spring arms extend away from the base (1) in the direction of the longitudinal-side ends of the respective cover plate part (2¹, 2²) and then back in the direction of the center of the respective cover plate part (21, 2²).

8. A spring element in accordance with any one of the preceding claims,
**characterized in that**
the base (1) has elements of a kind of bayonet connection at its lower side, via which the spring element is connectable to a bottom layer having corresponding counter-elements.

9. A mattress or an undermattress having a plurality of individual support elements arranged distributed over the reclining surface,
**characterized in that**
individual support elements are provided at least regionally and are formed by spring elements (4, 4') in accordance with any one of the preceding claims, wherein
such spring elements (4, 4') are arranged in the lumbar area (7) and their separation line (I) extends transversely to the longitudinal direction of the mattress or undermattress; and
wherein
such spring elements (4, 4') are arranged in the shoulder area (6) and/or in the pelvic area (8) and their separation line (I) extends in parallel with the longitudinal direction of the mattress or undermattress.

10. A mattress or an undermattress in accordance with claim 9,
**characterized in that**
such spring elements (4, 4') are provided with bayonet connection elements, with two kinds of spring elements (4, 4') being provided whose bayonet connection elements are arranged rotated by 90° with respect to one another.

11. A mattress in accordance with claim 9 or claim 10,
**characterized in that**
the spring elements (4, 4') are arranged at both sides of a support (10), with the base (1) being connected to the respective support (10).

12. A mattress in accordance with any one of the claims 9 to 11,
**characterized in that**
the spring elements (4, 4') are arranged symmetrical to a transverse central plane (III) of the mattress.

## Revendications

1. Élément de ressort pour un matelas à ressorts ou un sommier, comprenant une base (1), une plaque de couverture (2) et un corps de ressort (3) disposé entre la base (1) et la plaque de couverture (2), la plaque de couverture (2) étant constituée de deux parties (2¹, 2²) allongées disposées l'une à côté de l'autre parallèlement à une ligne de séparation (I), et chaque partie (2¹, 2²) étant soutenue par rapport à la base (1) par un propre corps de ressort individuel (3¹, 3²), chaque corps de ressort individuel (3¹, 3²) étant réalisé avec deux bras de ressort qui sont coudés au moins une fois entre la base (1) et la partie de plaque de couverture associée (2¹, 2²).

2. Élément de ressort selon la revendication 1,
**caractérisé en ce que**
le contour extérieur global des parties de plaque de couverture (2¹, 2²) est au moins approximativement carré.

3. Élément de ressort selon la revendication 1,
**caractérisé en ce que**
le contour extérieur global des parties de plaque de couverture (2¹, 2²) est au moins approximativement rectangulaire, la ligne de séparation (I) entre les parties de plaque de couverture (2¹, 2²) s'étendant en particulier parallèlement à l'axe longitudinal du rectangle.

4. Élément de ressort selon l'une des revendications précédentes,
**caractérisé en ce que**
les corps de ressort individuels (3¹, 3²) sont susceptibles de se débattre indépendamment les uns des autres, en particulier du fait qu'il n'existe pas de liaison entre les corps de ressort individuels (3¹, 3²) entre eux et/ou entre les parties de plaque de couverture (2¹, 2²) entre elles.

5. Élément de ressort selon l'une des revendications précédentes,
**caractérisé en ce que**
les corps de ressort individuels (3¹, 3²) sont soutenus par rapport à une base commune (1).

6. Élément de ressort selon l'une des revendications précédentes,
**caractérisé en ce que**
les parties coudées des corps de ressort individuels (3¹, 3²), vues en direction de débattement (II), ne se chevauchent pas.

7. Élément de ressort selon l'une des revendications précédentes,
**caractérisé en ce que**
les bras de ressort s'étendent en éloignement de la base (1) en direction des extrémités longitudinales de la partie de plaque de couverture respective (2¹, 2²) pour retourner ensuite en direction du milieu de la partie de plaque de couverture respective (2¹, 2²).

8. Élément de ressort selon l'une des revendications précédentes,
**caractérisé en ce que**
la base (1) comprend sur sa face inférieure des éléments sous la forme d'une liaison à baïonnette via laquelle l'élément de ressort est susceptible d'être relié à un support par des éléments antagonistes correspondants.

9. Matelas ou sommier comprenant une multitude d'éléments de soutien individuels disposés en répartition sur la surface de couchage,
**caractérisé en ce que**
il est prévu au moins localement des éléments de soutien individuels qui sont formés par des éléments de ressort (4, 4') selon l'une des revendications précédentes, dans lequel
dans la zone de lombaire sont agencés des éléments de ressort (4, 4') tels que leur ligne de séparation (I) s'étend transversalement à la direction longitudinale du matelas ou du sommier, et
dans la zone des épaules (6) et/ou dans la zone du bassin (8), il est prévu des éléments de ressort (4, 4') tels que leur ligne de séparation (I) s'étend parallèlement à une direction longitudinale du matelas ou du sommier.

10. Matelas ou sommier selon la revendication 9,
**caractérisé en ce que**
il est prévu des éléments de ressort (4, 4') pourvus d'éléments de liaison à baïonnette, deux types d'éléments de ressort étant prévus tels que leurs éléments de liaison à baïonnette sont disposés en étant tournés de 90° les uns par rapport aux autres.

11. Matelas selon la revendication 9 ou 10,
**caractérisé en ce que**
les éléments de ressort (4, 4') sont disposés de part et d'autre d'un support (10), la base (1) étant reliée à un support respectif (10).

12. Matelas selon l'une des revendications 9 à 11,
**caractérisé en ce que**
les éléments de ressort (4, 4') sont disposés symétriquement par rapport à un plan médian transversal (III) du matelas.
